Europäisches Patentamt

European Patent Office

Office européen des brevets

(11) Publication number: **0 094 730**
**B1**

# EUROPEAN PATENT SPECIFICATION

(45) Date of publication of patent specification: **18.03.87**

(21) Application number: **83200704.1**

(22) Date of filing: **16.05.83**

(51) Int. Cl.⁴: **F 16 L 47/02, F 16 L 47/06, B 29 C 65/06**

(54) **A plastic pipe and method for manufacturing a plastic pipe of this type.**

(30) Priority: **19.05.82 NL 8202065**

(43) Date of publication of application:
**23.11.83 Bulletin 83/47**

(45) Publication of the grant of the patent:
**18.03.87 Bulletin 87/12**

(84) Designated Contracting States:
**AT BE CH DE FR GB IT LI LU NL SE**

(56) References cited:
**FR-A-1 418 316
NL-A-7 011 090
NL-A-7 705 902
NL-A-7 900 173
US-A-3 779 446**

(73) Proprietor: **WAVIN B.V.
Händellaan 251
NL-8031 EM Zwolle (NL)**

(72) Inventor: **Nielsen, Uffe Dan
8 Haxolmvej
DK-8870 Langa (DK)**
Inventor: **Larsen, Christian
51 Skovbakkevej
DK-8820 Braband (DK)**

(74) Representative: **van der Veken, Johannes Adriaan et al
EXTERPATENT B.V. Willem Witsenplein 4
NL-2596 BK 's-Gravenhage (NL)**

Courier Press, Leamington Spa, England.

## Description

The invention relates to a plastic pipe comprising a pipe part having longitudinally extending channels in its wall and an end portion in the form of a socket end portion or spigot end portion suitable for forming a spigot-socket connection.

A plastic pipe of this type, comprising longitudinally extending channels in its wall and being provided with a socket end, is known from NL—A—7900173. The socket end of such a plastic pipe is formed by heating an end portion of the plastics pipe and subsequently pressing the inner and outer walls of the channels of the plastic pipe to each other, the end of said plastic pipe whether or not being subjected to a rotational motion during said action.

The spigot end is formed in the same manner, simultaneously with a chamber to facilitate pushing said spigot end into a socket end.

Said known plastic pipe presents the disadvantage that the formation of the socket end and spigot end is rather time consuming and cumbersome.

It is an additional disadvantage of the known pipe that the obtained end portion, more particularly the front end portion of the socket end or spigot end, often has an irregular shape while the impact strength is less than that of an undeformed pipe.

Furthermore, the selection of the diameter of the socket end portion is bounded to the diameter of the plastic pipe.

The present invention aims to provide a plastic pipe of the abovementioned type in which the shape of the socket end portion is no longer bounded to the diameter of the plastic pipe, while a socket end portion and spigot end portion, respectively to be formed to such a plastic pipe can be provided in a much easier manner and the obtained plastic pipe additionally possesses optimum impact properties.

This object can be achieved according to the invention in that, the socket end portion or spigot end portion respectively having been obtained by spinwelding a widened end portion or spigot end portion respectively to the front end of an initial plastic pipe part; and prior to the spinwelding operation, the widened end portion or spigot end portion respectively, having been provided with a truncated conical welding end surface whilst the front end portion of the initial plastic pipe part extended substantially perpendicularly to the axis of said initial pipe part, the apex of the truncated conical welding end surface being located within the interior of said widened end portion or spigot end portion respectively.

To obtain this kind of plastic pipe any type of widened end portion being connected to the front end of the plastic pipe part by means of spinwelding, can be used. The operation results in plastic pipes comprising socket end portions which are obtained in a very rapid manner and can optimally be adapted to the desired type of application.

It should be noted that spinwelding for connecting two full walled foam plastic tubular parts for forming a bottle, in which process a first tubular part is provided with a truncated conical welding front surface the apex of same being located within the interior of said tubular part, is known per se from FR—A—1.418.316.

However, in this case the other tubular part is also provided with a truncated conical welding front surface adapted to the welding surface of the first tubular part.

On the other hand it is also known from this document to connect the first tubular part and also the other tubular part, both being provided with a front end portion extending substantially parallel to the axis of both tubular parts, by spinwelding.

This spinwelding process presents the disadvantage that it does not provide an excellent weld if one of the tubular parts comprises longitudinally extending channels in its wall.

According to US—A—3.799.446 two plastic pipes free from longitudinally extending channels in their wall are connected by spinwelding both parts being provided with a front end portion extending substantially perpendicularly to the axis of both pipes or both pipes are provided with chamfered front ends adapted to each other.

The front ends are spinwelded to each other.

This process does also not provide welds of excellent strength when one of the pipes comprises longitudinally extending channels in its wall.

Very conveniently, in the present invention a projecting annular edge part on the outer side of the widened end portion or spigot end portion respectively may extend to beyond a transition weld surface formed between the widened end portion and the front end portion of the initial plastic pipe part for centering the parts to be spinwelded to each other.

The initial plastic pipe part and the widened end portion and spigot end portion respectively particularly consist of a polyvinylchloride or a modified polyvinylchloride, having equal or different K-values. However, the invention is not restricted to this type of plastic.

The invention also relates to a method for manufacturing a plastic pipe comprising a pipe part having longitudinally extending channels in its wall and an end portion in the form of a socket end portion or spigot end portion, suitable for forming a spigot socket connection, said method being characterized according to the invention in that a widened end portion or spigot end portion respectively is connected to the front end of the initial plastic pipe part by spinwelding, and prior to spinwelding the widened end portion or spigot end pipe portion respectively, have been provided with a truncated conical welding end surface and the front end portion of the initial plastic pipe part extends substantially perpendicularly to the axis of the initial pipe part, the apex of the truncated conical welding end surface being located within the interior of said widened end portion or spigot end portion respectively.

To form a socket end very advantageously a widened end portion is used, provided with a truncated conical welding front surface, the extension of said surface forming a cone having a top angle being comprised between at most 160° and at least 90° and preferably from 100 to 150°. A subsequent spinwelding operation will in a very short period of time effect an optimum connection between the initial plastic pipe and the widened end portion, spigot end portion respectively. Additionally the channels in the pipe wall at the side of the socket end portion, are effectively sealed.

To form a spigot end portion, preferably a full walled pipe portion is employed having an outer hand and an inner diameter substantially corresponding to the initial channel walled plastic pipe. The extension of the truncated conical welding front surface of said portion forms a cone, the relative top angle of said cone being comprised between preferably 90° and 160° and preferably amounting to about 130°. This provides an excellent spinweld connection in a very short period.

Description of the Drawings
— Fig. 1 is a plastic pipe with a socket end portion, obtained according to the invention;
— Fig. 2 is a widened end portion to be spinwelded to the front end of an initial plastic pipe, for forming a plastic pipe with a socket end portion according to the invention;
— Fig. 3 is a sectional view according to line III—III in fig. 1;
— Fig. 4 is a longitudinal view on an enlarged scale of part of the plastic pipe at the location of a longitudinally extending channel;
— Fig. 5 is a similar section view as in fig. 4, at the site of a connecting wall;
— Fig. 6 is a plastic pipe with a spigot end portion, obtained according to the invention;
— Fig. 7 is an initial fullwalled pipe portion to be spinwelded to the front end of a plastic pipe to form a plastic pipe comprising a spigot end portion;
— Fig. 8 is a longitudinal sectional view of a hollow spigot end portion; and
— Fig. 9 is a longitudinal sectional view of a hollow widened end portion.

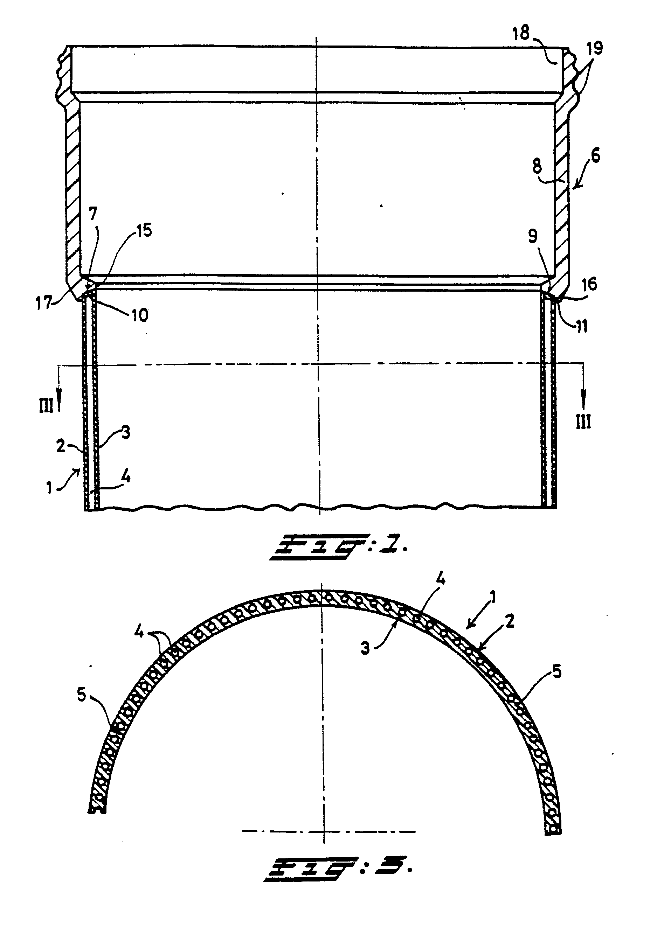

Description of the Preferred Embodiments
Fig. 1 illustrates a plastic pipe part comprising longitudinally extending channels 4, formed by walls 5 being integral with the inner wall 3 and the outer wall 2 of the plastic pipe. The plastic pipe comprises a socket end portion 6 formed by spinwelding a fullwalled widened end portion 8 to pipe part 1.

The fullwalled widened end portion 8 is advantageously provided with a widened region 18 for receiving a sealing sleeve, the head of the latter being retained by a retaining ring, engaging the elevations 19 provided on the outer side of the widened end portion 8.

To obtain a good connection by means of spinwelding, the initial plastic pipe 1 is provided with a front end 7 extending substantially perpendicularly to the axis of the initial pipe, the widened end portion 8 being provided with an adjoining welding surface 9 in the form of a truncated cone.

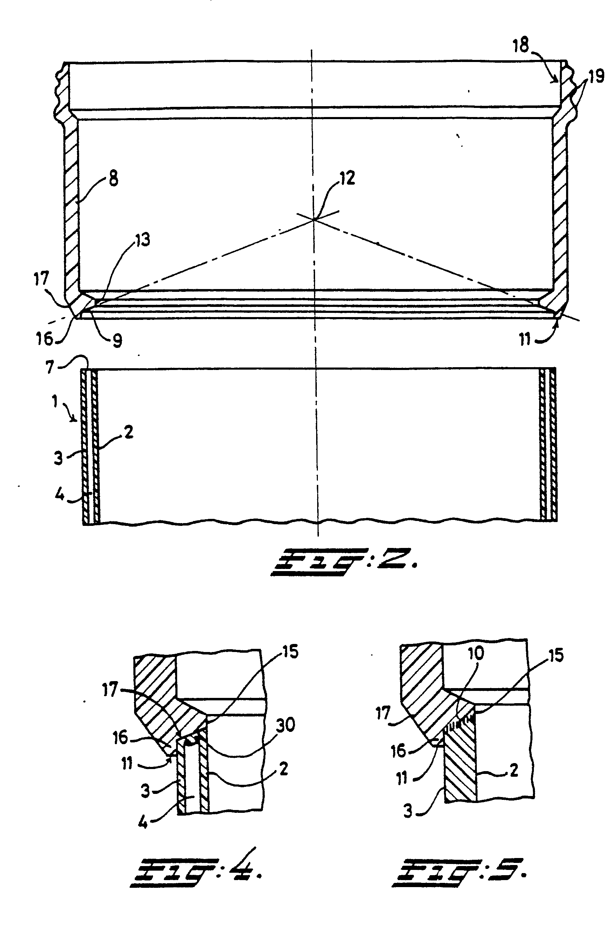

Fig. 2 illustrates that the extension of the truncated conical welding surface 9 forms an imaginary cone, the apex 12 of same being disposed within the widened end portion.

The apex angle of the top 12 of said cone is advantageously comprised between at most 160°C and at least 90°C, said top angle preferably being comprised between 110°—150° and, more preferably, amounting to 130°.

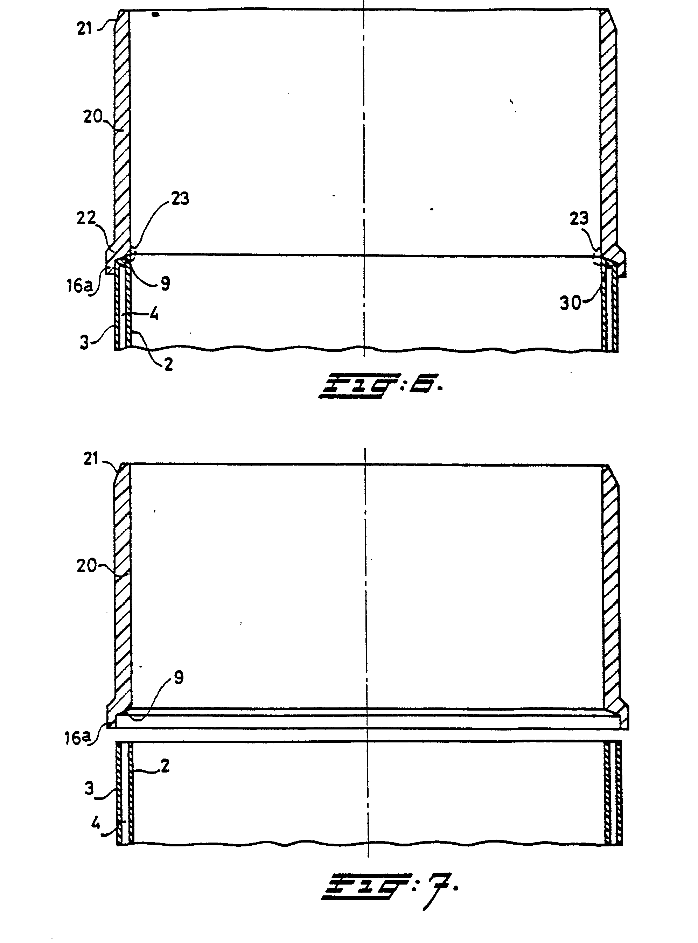

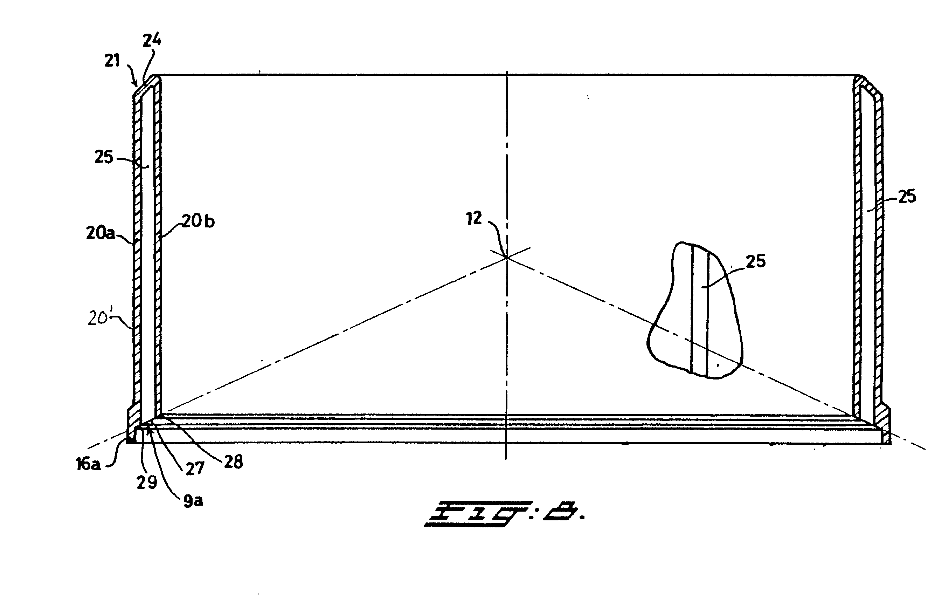

During the spinwelding operation material 30 of the outer wall 3 is substantially pressed into the channels 4, as illustrated in fig. 4. This results in an optimum connection between the initial plastic pipe part and the widened end portion 8 and additionally, at that location an extremely good seal of the channels 4 in the wall of the plastic pipe part 1.

The outer side of the widened end portion 8 is provided with a projecting annular edge part 16, which extends after the spinwelding operation, to beyond a weld transition surface 10 formed between the welding surface 9 and front end portion 7 of the plastic pipe 1. Said annular edge portion 16 is used for centering front end portion 7 with respect to widened end portion 8 at the start of the spinwelding operation, and for covering the obtained weld in the finished plastic pipe with socket end portion. Said annular edge part 16 moreover, supports an end part 11, extending substantially perpendicularly to the pipe axis and merging into the outer wall of the widened end portion 8 through a truncated conical wall 17.

The welding transition surface 10 terminates into an inner wall part 15 of the widened end portion 8 having an inner diameter substantially corresponding to the inner diameter of the pipe 1. For the welding operation an initial widened end portion 8 is used, comprising an inner wall part 13 adjoining the truncated conical welding surface 9 and having a diameter corresponding to or smaller than the inner diameter of the plastic pipe part 1. This creates the possibility of using the same widened end portion 8 for pipe parts having corresponding outer, but differing inner diameters.

Any redundant material and/or weld ridges, may be removed by machining the inner wall portion so that a smooth inner wall portion 15 is obtained, having a diameter corresponding to the inner diameter of the pipe part 1.

The pipe part 1 and the widened end portion 8 particularly consist of a polyvinylchloride or modified polyvinylchloride having identical or differing K-values.

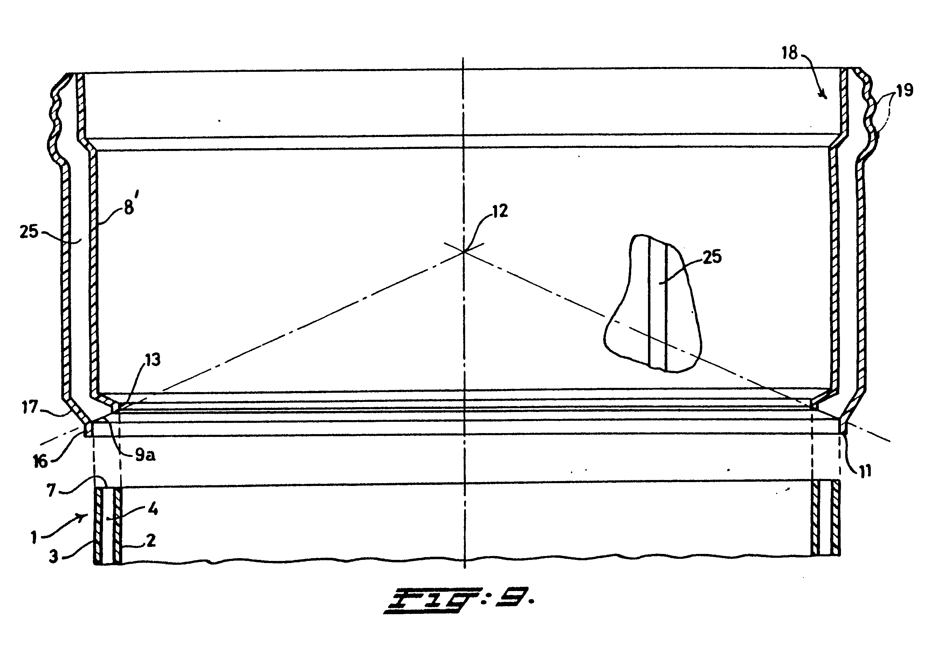

Fig. 6 illustrates an initial plastic pipe 1, being spinwelded to a fullwalled pipe part 20, said pipe portion 20 on the one hand sealing the channels 4 and on the other end functioning as a spigot end portion. The fullwalled pipe portion 20 is advantageously provided with an end chamfer 21.

The inner and outer diameter of said full-walled pipe portion 20 substantially correspond to the inner and outer diameter of the initial plastic pipe 1. Said pipe portion 20 is also provided with the aforementioned truncated conical weld surface 9, the front end portion 7 of the initial plastic pipe 1 extending substantially perpendicularly to the pipe axis.

To realize the relative centering conical weld surface 9 is advantageously adjoined by an annular edge part 16a, obtained by an annular outer thickened wall part 22, upon the outer side of a full-walled pipe portion 20.

After the spinwelding operation any weld ridges being present on the inner side of the assembly illustrated with dotted lines may be removed by machining.

### Example 1

To obtain a plastic pipe comprising a spinwelded widened end portion, use is made of an initial, extruded plastic pipe part 1, comprising longitudinally extending channels 4 and consisting of polyvinylchloride having a K-value comprised between 65 and 75 and of an injection-moulded widened end portion 8 of polyvinylchloride having a K-value of 70. With respect to the plastic pipe 1, widened end portion 8 is rotated with a circumferential velocity of 2 m/sec.

In a first step a line contact is provided between the outer side of the front surface 7 and a welding surface 9, so that plastic material 30 from the outer wall 3 of the plastic pipe 1 is pressed into the channels 4.

In a second step the actual spinweld joint is formed while still rotating and exerting a pressure.

In a third step the spinwelding operation is terminated, and cooling under a pressure of, for instance, 6 kgf/cm² is effected, whereupon a part 13 projecting outside the inner wall of the initial pipe 1 is removed.

### Example II

Example I is repeated, however, with a full-walled spigot end pipe portion 20, thus providing initial plastic pipe with a fullwalled spigot end portion sealing the channels 4, a penetration of such a spigot end portion 20 into a socket end being facilitated by the end chamfer 21 (see fig. 6).

### Example III

Example II is repeated, but use is made of partially hollow, injection-moulded spigot end pipe portion 20'. Said spigot end pipe portion therefore comprises an outer wall 20a and an inner wall 20b (fig. 8 illustrates a longitudinal section of such a portion 20') one end of said walls being sealed by a bottom 24 forming an end chamfer 21.

Partitions 25 have been formed by the injection moulding operation and comprise ends 27 forming together with an inner wall end 28 and outer wall end 29 an imaginary welding surface 9a (see fig. 8).

A spinwelding operation results in an extremely good connection and considerable economies on plastic material; by employing such a pipe portion 20' additionally a notable weight reduction is obtained.

In certain cases it may be recommended to remove edge part 16a as used for the centering operation, after the formation of the weld, so as to ensure an even outer diameter of the pipe portion 20' and the initial pipe.

To obtain the desired spinweld joint, obviously instead of partitions 25, use can also be made of a thickened edge such as edge 22 positioned at the inner side of the outer wall and of the inner wall.

### Example IV

Example I is repeated, while using an at least partially hollow, widened end portion 8', the side walls of same may be interconnected by means of partitions 25 (as illustrated in fig. 9).

An imaginary welding surface 9a is then formed by the free ends of the partitions, the inner wall and the outer wall surface of the widened end portion 8'.

### Claims

1. A plastic pipe comprising a pipe part (1) having longitudinally extending channels (4) in its wall and an end portion in the form of a socket end portion (6) or spigot end portion, suitable for forming a spigot-socket connection, characterized in that, the socket end portion (6), or spigot end portion respectively, having been obtained by spinwelding a widened end portion (8, 8¹), or spigot end portion (20, 20¹) respectively to the front end (7) of an initial plastic pipe part (1); and prior to the spinwelding operation, the widened end portion (8, 8¹) or spigot end portion (20, 20¹) respectively having been provided with a truncated conical welding end surface (9, 9a) whilst the front end portion (7) of the initial plastic pipe part (1) extended substantially perpendicularly to the axis of said initial pipe part (1), the apex (12) of the truncated conical welding end surface (9, 9a) being located within the interior of said widened end portion (8, 8¹) or spigot end portion (20, 20¹) respectively.

2. A plastic pipe as claimed in claim 1, characterized in that a projecting annular edge part (16, 16a) on the outer side of the widened end portion or spigot end portion respectively extends to beyond a transition weld surface (10) formed between the end portion (8, 8¹ or 20, 20¹) and the front end portion (7) of the initial plastic pipe part (1).

3. A plastic pipe as claimed in claim 2, characterized in that the projecting annular edge part (16) has an end surface (11) extending substantially perpendicularly to the pipe axes, said end surface merging into the outer wall of the widened end portion (8, 8¹) through a truncated conical wall.

4. A plastic pipe as claimed in claim 1, characterized in that a welding transition surface (10) between said initial plastic pipe (1) and the wide-

ned end portion (8, 8¹) or spigot end portion (20, 20¹) terminates in an inner wall part (15) of the widened end portion (8, 8¹) or the spigot end pipe portion (20, 20¹), respectively, the inner diameter of same substantially corresponding to the inner diameter of the initial pipe part (1).

5. A plastic pipe as claimed in claim 1—4, characterized in that initial plastic pipe part (1) and the widened end portion (8, 8¹), and spigot end portion (20, 20¹) respectively, consist of a polyvinylchloride or a modified polyvinylchloride having identical or differing K-values.

6. A plastic pipe as claimed in any one of the preceding claims, characterized in that plastic material (30) pressed away during the spinwelding operation has been received in the channels (4).

7. A plastic pipe according to any one of the preceding claims, characterized in that in the completed weld between a spigot end pipe portion and an initial plastic pipe part (1), the outer diameter of the transition surface and of the initial pipe part (1) and the spigot portion substantially correspond to each other.

8. A plastic pipe as claimed in any one of the preceding claims, characterized in that the welding surface (9, 9a) forms a cone having a top angle of at least 90° and at most 160°, preferably comprised between 110° and 150°.

9. Method for manufacturing a plastic pipe comprising a pipe part (1) having longitudinally extending channels in its wall and an end portion in the form of a socket end portion (6) or spigot end portion, suitable for forming a spigot-socket connection, characterized in that a widened end portion (8, 8¹) or spigot end portion (20, 20¹) respectively is connected to the front end (7) of the initial plastic pipe part (1) by spinwelding, and prior to spinwelding the widened end portion (8, 8¹), or spigot end portion (20, 20¹) respectively, have been provided with a truncated conical welding end surface (9, 9a) and the front end portion (7) of the initial plastic pipe part (1) extends substantially perpendicularly to the axis of said initial pipe part (1), the apex (12) of the truncated conical welding end surface (9, 9a) being located within the interior of said widened end portion (8, 8¹) or/and spigot end portion (20, 20¹) respectively.

10. Method as claimed in claim 9, characterized in that the widened end portion (8, 8¹) or spigot end pipe portion (20, 20¹) respectively, comprise a projecting annular edge part (16, 16a) having an inner diameter substantially corresponding to the outer diameter of the initial plastic pipe part (1).

11. Method according to claim 9, characterized in that an annular edge part (16) of a widened end portion (8, 8¹) is provided with an end surface (11) extending substantially perpendicularly to the pipe axis and merging into the outer wall of the widened end portion through a truncated conical wall.

12. Method according to claims 9—11, characterized in that the extension of the truncated conical welding surface forms a cone having an apex (12) with a top angle comprised between at most 160° and at least 90°, preferably from 110° to 150°.

13. A method as claimed in any one of the preceding claims 9 to 12, characterized in that during the spinwelding operation, redundant material is pressed into the longitudinally extending channels (4) disposed in the wall of the initial plastic pipe part (1).

14. A method according to claim 9—13, characterized in that the welding surface (9, 9a) of a widened end portion (8, 8¹) terminates into an inner wall part (13) having a diameter which corresponds to the inner diameter of the initial plastic pipe (1).

15. A method according to claims 9—14, characterized in that the plastic pipe part and the widened end portion, or spigot end portion respectively, consist of a polyvinylchloride or a modified polyvinylchloride or a modified polyvinylchloride, having identical or different K-values.

16. A method as claimed in claim 14, characterized in that after the spinwelding operation the inner wall part (13) of the end portion (8, 8¹) is so machined that its diameter substantially corresponds to the inner diameter of the initial plastic pipe part (1) thus forming an inner wall part (15).

**Patentansprüche**

1. Kunststoffrohr, bestehend aus einem Rohrteil (1) mit längsverlaufenden Kanälen (4) in seiner Wand und einem Endbereich in Form eines Muffenendteils (6) oder eines Einsteckendteils zur Bildung einer Einsteckteil-Muffen-Verbindung, dadurch gekennzeichnet, daß der Muffenendteil (6) bzw. der Einsteckendteil durch eine Reibschweißverbindung eines erweiterten Endteils (8, 8') bzw. eines Einsteckendteils (20, 20') mit dem vorderen Ende (7) eines Kunststoffausgangsrohrteils (1) gebildet und vor dem Reibschweißvorgang der erweiterte Endteil (8, 8') bzw. Einsteckendteil (20, 20') mit einer kegelstumpfförmigen Endschweißfläche (9, 9a) versehen ist, während der vordere Endbereich (7) des Kunststoffausgangsrohrteils (1) im wesentlichen senkrecht zur Achse des Ausgangsrohrteils (1) verlief, und daß der Scheitel (12) der kegelstumpfförmigen Endschweißfläche (9, 9a) im Inneren des erweiterten Endteils (8, 8') bzw. Einsteckendteils (20, 20') angeordnet ist.

2. Kunststoffrohr nach Anspruch 1, dadurch gekennzeichnet, daß sich ein vorstehender ringförmiger Randteil (16, 16a) an der Außenseite des erweiterten Endteils bzw. Einsteckendteils über eine Verbindungsschweißfläche (10) hinauserstreckt, die zwischen dem Endteil (8, 8'; 20, 20') und dem vorderen Endbereich (7) des Kunststoffausgangsrohrteils (1) gebildet ist.

3. Kunststoffrohr nach Anspruch 2, dadurch gekennzeichnet, daß der vorstehende ringförmige Randteil (16) eine im wesentlichen senkrecht zu den Rohrachsen verlaufende Endfläche (11) aufweist und diese Endfläche in die Außenwand des erweiterten Endteils (8, 8') über eine kegelstumpfförmige Wand übergeht.

4. Kunststoffrohr nach Anspruch 1, dadurch gekennzeichnet, daß eine Verbindungsschweißfläche (10) zwischen dem Kunststoffausgangsrohr (1) und dem erweiterten Endteil (8, 8') bzw. Einsteckendteil (20, 20') in einen Innenwandteil (15) des erweiterten Endteils (8, 8') bzw. Einsteckendteils (20, 20') ausläuft, dessen Innendurchmesser im wesentlichen dem Innendurchmesser des Ausgangsrohrteils (1) entspricht.

5. Kunststoffrohr nach Anspruch 1 bis 4, dadurch gekennzeichnet, daß der Kunststoffausgangsrohrteil (1) und der erweiterte Endteil (8, 8') bzw. der Einsteckendteil (20, 20') aus einem Polyvinylchlorid oder einem modifizierten Polyvinylchlorid mit gleichen oder verschiedenen K-Werten besteht.

6. Kunststoffrohr nach einem der vorhergehenden Ansprüche, dadurch gekennzeichnet, daß während des Reibschweißvorgangs weggedrücktes Kunststoffmaterial (30) in den Kanälen (4) aufgenommen ist.

7. Kunststoffrohr nach einem der vorhergehenden Ansprüche, dadurch gekennzeichnet, daß in der fertiggestellten Schweißverbindung zwischen einem Einsteckendteil und einem Kunststoffausgangsrohrteil (1) der Außendurchmesser der Verbindungsfläche und des Ausgangsrohrteils (1) sowie des Einsteckteils einander im wesentlichen entsprechen.

8. Kunststoffrohrteil nach einem der vorhergehenden Ansprüche, dadurch gekennzeichnet, daß die Schweißfläche (9, 9a) einen Kegel bildet, dessen Scheitelwinkel mindestens 90° und höchstens 160° beträgt und vorzugsweise zwischen 110° und 150° liegt.

9. Verfahren zum Herstellen eines Kunststoffrohrs, bestehend aus einem Rohrteil (1) mit längsverlaufenden Kanälen in seiner Wand und einem Endbereich in der Form eines Muffenendteils (6) bzw. eines Einsteckendteils zur Bildung einer Einsteckteil-Muffen-Verbindung, dadurch gekennzeichnet, daß ein erweiterter Endteil (8, 8') bzw. Einsteckendteil (20, 20') mit dem vorderen Ende (7) des Kunststoffausgangsrohrteils (1) durch Reibschweißen verbunden wird, vor dem Reibschweißen der erweiterte Endteil (8, 8') bzw. der Einsteckendteil (20, 20') mit einer kegelstumpfförmigen Schweißendfläche (9, 9a) versehen worden sind und der vordere Endbereich (7) des Kunststoffausgangsrohrteils (1) im wesentlichen senkrecht zur Achse des Ausgangsrohrteils (1) verläuft und daß der Scheitel (12) der kegelstumpfförmigen Schweißendfläche (9, 9a) im Inneren des erweiterten Endteils (8, 8') bzw. des Einsteckendteils (20, 20') angeordnet ist.

10. Verfahren nach Anspruch 9, dadurch gekennzeichnet, daß der erweiterte Endteil (8, 8') bzw. Einsteckendteil (20, 20') einen vorstehenden ringförmigen Randteil (16, 16a) aufweist, dessen Innendurchmesser im wesentlichen dem Außendurchmesser des Kunststoffausgangsrohrteils (1) entspricht.

11. Verfahren nach Anspruch 9, dadurch gekennzeichnet, daß ein ringförmiger Randteil (16) eines erweiterten Endteils (8, 8') mit einer Endfläche (11) versehen wird, die im wesentlichen senkrecht zur Rohrachse verläuft und in die Außenwand des erweiterten Endteils über eine kegelstumpfförmige Wand übergeht.

12. Verfahren nach den Ansprüchen 9 bis 11, dadurch gekennzeichnet, daß die Verlängerung der kegelstumpfförmigen Schweißfläche einen Kegel mit einem Scheitel (12) mit einem Scheitelwinkel bildet, der zwischen höchstens 160° und mindestens 90°, vorzugsweise zwischen 110° bis 150°, liegt.

13. Verfahren nach einem der vorhergehenden Ansprüche 9 bis 12, dadurch gekennzeichnet, daß während des Reibschweißvorgangs Überschußmaterial in die längsverlaufenden, in der Wand des Kunststoffausgangsrohrteils (1) angeordneten Kanäle (4) gedrückt wird.

14. Verfahren nach den Ansprüchen 9 bis 13, dadurch gekennzeichnet, daß die Schweißfläche (9, 9a) eines erweiterten Endteils (8, 8') in einen Innenwandteil (13) mit einem Durchmesser ausläuft, der dem Innendurchmesser des Kunststoffausgangsrohrs (1) entspricht.

15. Verfahren nach den Ansprüchen 9 bis 14, dadurch gekennzeichnet, daß der Kunststoffrohrteil und der erweiterte Endteil bzw. der Einsteckendteil aus einem Polyvinylchlorid oder einem modifizierten Polyvinylchlorid mit gleichen oder verschiedenen K-Werten bestehen.

16. Verfahren nach Anspruch 14, dadurch gekennzeichnet, daß nach dem Reibschweißvorgang der Innenwandteil (13) des Endteils (8, 8') derart bearbeitet wird, daß sein Durchmesser im wesentlichen dem Innendurchmesser des Kunststoffausgangsrohrteils (1) entspricht und somit einen Innenwandteil (15) bildet.

**Revendications**

1. Tuyau en matière plastique comprenant un élément de tuyau (1) pourvu de conduits longitudinaux (4) dans sa paroi et une partie d'extrémité ayant la configuration d'une partie d'extrémité en forme d'embout femelle (6) ou d'une partie d'extrémité en forme d'embout mâle, convenant pour la réalisation d'un raccord embout mâle-embout femelle, caractérisé en ce que la partie d'extrémité en forme d'embout femelle (6) ou respectivement la partie d'extrémité en forme d'embout mâle a été obtenue par un soudage en rotation d'une partie d'extrémité élargie (8, 8[1]) ou respectivement d'une partie d'extrémité en forme d'embout mâle (20, 20[1]), sur l'extrémité frontale (7) d'un élément de tuyau initial en matière plastique (1), et avant l'opération de soudage en rotation, la partie d'extrémité élargie (8, 8[1]) ou respectivement la partie d'extrémité en forme d'embout mâle (20, 20[1]) a été dotée d'une surface d'extrémité tronconique de soudage (9, 9a), tandis que la partie d'extrémité frontale (7) de l'élément de tuyau initial en matière plastique (1) s'étend sensiblement perpendiculairement à l'axe dudit élément du tuyau initial (1), le sommet (12) de la surface d'extrémité tronconique de soudage (9, 9a) étant situé à l'intérieur de ladite partie d'extrémité élargie (8, 8$^1$) ou respectivement de ladite partie d'extrémité en forme d'embout mâle (20, 20$^1$).

2. Tuyau en matière plastique tel que défini dans la revendication 1, caractérisé en ce qu'un élément de bord annulaire saillant (16, 16a), situé sur la face extérieure de la partie d'extrémité élargie ou respectivement de la partie d'extrémité en forme d'embout mâle, s'étend au-delà d'une surface de soudage de transition (10) formée entre la partie d'extrémité (8, 8$^1$ ou 20, 20$^1$) et la partie d'extrémité frontale (7) de l'élément de tuyau initial en matière plastique (1).

3. Tuyau en matière plastique tel que défini dans la revendication 2, caractérisé en ce que l'élément de bord annulaire saillant (16) comporte une surface d'extrémité (11) s'étendant sensiblement perpendiculairement aux axes des tuyaux, ladite surface d'extrémité se raccordant à la paroi extérieure de la partie d'extrémité élargie (8, 8$^1$) par l'intermédiaire d'une paroi tronconique.

4. Tuyau en matière plastique tel que défini dans la revendication 1, caractérisé en ce qu'une surface de soudage de transition (10) entre ledit tuyau initial en matière plastique (1) et la partie d'extrémité élargie (8, 8$^1$) ou la partie d'extrémité en forme d'embout mâle (20, 20$^1$) se termine par un élément de paroi intérieur (15) de la partie d'extrémité élargie (8, 8$^1$) ou respectivement de la partie d'extrémité de tuyau en forme d'embout mâle (20, 20$^1$), le diamètre intérieur de cet élément de paroi intérieur correspondant sensiblement au diamètre intérieur de l'élément de tuyau initial (1).

5. Tuyau en matière plastique tel que défini dans les revendications 1—4, caractérisé en ce que l'élément de tuyau initial en matière plastique (1) et la partie d'extrémité élargie (8, 8$^1$) ou respectivement la partie d'extrémité en forme d'embout mâle (20, 20$^1$), est constituée par du poly (chlorure de vinyle) ou par un poly (chlorure de vinyle) modifié possédant des valeurs K identiques ou différentes.

6. Tuyau en matière plastique tel que défini dans l'une quelconque des revendications précédentes, caractérisé en ce que ladite matière plastique (30) refoulée lors de l'opération de soudage en rotation, est venue se loger dans les conduits (4).

7. Tuyau en matière plastique selon l'une quelconque des revendications précédentes, caractérisé en ce que, lorsque la soudure entre une partie d'extrémité de tuyau en forme d'embout mâle et un élément de tuyau initial en matière plastique (1) est réalisée, les diamètres extérieurs de la surface de transition et de l'élément de tuyau initial (1) et de la partie en forme d'embout mâle correspondant sensiblement les uns aux autres.

8. Tuyau en matière plastique, tel que défini dans l'une quelconque des revendications précédentes, caractérisé en ce que la surface de soudage (9, 9a) forme un cône possédant un angle au sommet égal au moins à 90° et au plus à 160°, et de préférence compris entre 110° et 150°.

9. Procédé de fabrication d'un tuyau en matière plastique comprenant un élément de tuyau (1) pourvu de conduits longitudinaux dans sa paroi et une partie d'extrémité ayant la configuration d'une partie d'extrémité en forme d'embout femelle (6) ou d'une partie d'extrémité en forme d'embout mâle, convenant pour la réalisation d'un raccord embout mâle-embout femelle, caractérisé en ce qu'on raccorde une partie d'extrémité élargie (8, 8$^1$) ou respectivement une partie d'extrémité en forme d'embout mâle (20, 20$^1$) à l'extrémité frontale (7) de l'élément de tuyau initial en matière plastique (1) par un soudage en rotation et en ce qu'avant le soudage en rotation, on a aménagé sur la partie d'extrémité élargie (8, 8$^1$) ou respectivement sur la partie d'extrémité en forme d'embout mâle (20, 20$^1$), une surface d'extrémité tronconique de soudage (9, 9a), et la partie d'extrémité frontale (7) de l'élément de tuyau initial en matière plastique (1) s'étend sensiblement perpendiculairement à l'axe dudit élément de tuyau initial (1), le sommet (12) de la surface d'extrémité tronconique de soudage (9, 9a) étant situé à l'intérieur de ladite partie d'extrémité élargie (8, 8$^1$) et/ou respectivement de ladite partie d'extrémité en forme d'embout mâle (20, 20$^1$).

10. Procédé tel que défini dans la revendication 9, caractérisé en ce que la partie d'extrémité élargie (8, 8$^1$) ou respectivement la partie d'extrémité de tuyau en forme d'embout mâle (20, 20$^1$) comporte un élément de bord annulaire saillant (16, 16a) possédant un diamètre intérieur correspondant sensiblement au diamètre extérieur de l'élément de tuyau initial en matière plastique (1).

11. Procédé selon la revendication 9, caractérisé en ce qu'un élément de bord annulaire (16) d'une partie d'extrémité élargie (8, 8$^1$) est muni d'une surface d'extrémité (11) s'étendant sensiblement perpendiculairement à l'axe du tuyau et se raccordant à la paroi extérieure de la partie d'extrémité élargie par l'intermédiaire d'une paroi tronconique.

12. Procédé selon les revendications 9—11, caractérisé en ce que le prolongement de la surface de soudage tronconique forme un cône possédant un sommet (12) dont l'angle au sommet est compris entre au maximum 160° et au minimum 90°, et de préférence entre 110° et 150°.

13. Procédé tel que défini dans l'une quelconque des revendications précédentes 9 à 12, caractérisé en ce que, pendant l'opération de soudage en rotation, le matériau en excès est repoussé à l'intérieur des conduits longitudinaux (4) ménagés dans la paroi de l'élément de tuyau initial en matière plastique (1).

14. Procédé selon les revendications 9—13, caractérisé en ce que la surface de soudage (9, 9a) d'une partie d'extrémité élargie (8, 8') se termine par un élément de paroi intérieur (13) possédant un diamètre qui correspond au diamètre intérieur du tuyau initial en matière plastique (1).

15. Procédé selon les revendications 9—14, caractérisé en ce que l'élément de tuyau en matière plastique et la partie d'extrémité élargie ou respectivement la partie d'extrémité en forme d'embout mâle, sont réalisés en un poly (chlorure de vinyle) ou un poly (chlorure de vinyle) modifié, possédant des valeurs K identiques ou différentes.

16. Procédé tel que défini dans la revendication 14, caractérisé en ce que, après l'opération de soudage en rotation, on usine l'élément de paroi intérieur (13) de la partie d'extrémité (8, 8¹) de telle façon que son diamètre corresponde sensiblement au diamètre intérieur de l'élément de tuyau initial en matière plastique (1), en formant ainsi un élément de paroi intérieur (15).

FIG.1.

FIG.3.

Fig. 2.

Fig. 4.

Fig. 5.

_FIG:6._

_FIG:7._

Fig. 8.

Fig:9.

0 094 730